## Europäisches Patentamt

(19) **European Patent Office**

**Office européen des brevets**

(11) Veröffentlichungsnummer: **0 126 785**

**B1**

(12) **EUROPÄISCHE PATENTSCHRIFT**

(45) Veröffentlichungstag der Patentschrift:
08.03.89

(51) Int. Cl.⁴: **G 06 F 11/26**

(21) Anmeldenummer: **83105172.7**

(22) Anmeldetag: **25.05.83**

(54) **Prüf- und Diagnoseeinrichtung für Digitalrechner.**

(43) Veröffentlichungstag der Anmeldung:
**05.12.84 Patentblatt 84/49**

(45) Bekanntmachung des Hinweises auf die Patenterteilung:
**08.03.89 Patentblatt 89/10**

(84) Benannte Vertragsstaaten:
**DE FR GB**

(56) Entgegenhaltungen:
EP-A-0 095 928
US-A-3 582 902
US-A-3 651 472
US-A-4 023 142
US-A-4 183 461
US-A-4 253 183

IBM TECHNICAL DISCLOSURE BULLETIN, Band 18,
Nr. 7, Dezember 1975, Seiten 2181-2182, New York,
USA, D.K. JADUS et al.:"Test pad multiplexing
PATENTS ABSTRACTS OF JAPAN, Band 5, Nr.
163(E-78)(835), 20. Oktober 1981 & JP-A-5693430

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk, N.Y.
10504 (US)**

(84) Benannte Vertragsstaaten: **FR GB**

(72) Erfinder: **Blum, Arnold, Dipl.- Ing., Finkenweg 16,
D-7261 Gechingen (DE)**

(74) Vertreter: **Jost, Ottokarl, Dipl.- Ing., Schönaicher
Strasse 220, D-7030 Böblingen (DE)**

## Beschreibung

Die Erfindung betrifft eine Einrichtung zur Fehlerprüfung und -diagnose für eine elektronische Datenverarbeitungsanlage, die aus mindestens einem Prozessor, einem Hauptspeicher und einem Wartungs- und Bedienungsprozessor besteht, die über einen schnellen Systembus miteinander verbunden sind.

Das Testen von hochverdichteten Logik- und Speicherschaltkreisen auf Chips, aus denen elektronische Steuerungen, Prozessoren und Datenverarbeitungsanlagen aufgebaut sind, beruht sehr wesentlich auf der Zugänglichkeit (Beobachtbarkeit, Einstellbarkeit) der Gesamtheit aller Speicherelemente (bistabile Schalter, Flipflops) auf dem Chip.

EP-A-95 928, die zum Stand der Technik gehört nach A. 54 (3) und (4) EPÜ, und US-A-4 023 142 befassen sich mit einem gemeinsamen Diagnosebus, der das Laden und Auslesen von mit Adressen ausgewächten Speicherelementen von Computersystemen zum Testen der Schaltkreise dieser Computersysteme. Das System aus EP-A-95 928 ist ein Pipeline - Prozessor, wobei der Diagnosebus an den Progessoreingang- und ausgang angeschlossen werden kann.

Zeitgemäße Logikstrukturen und Systemarchitekturen machen daher oft Gebrauch von sogenannten LSSD-Entwurfsregeln (LSSD = Level Sensitive Scan Design), nach denen beispielsweise ein Logik-Subsystem signalpegelsensitiv ist, wenn - und nur dann - die Antwort im eingeschwungenen Zustand auf eine Eingangssignaländerung von Schaltkreis- und Leitungsverzögerungen innerhalb des Logik-Subsystems unabhängig ist (vgl. "A Logic Design Structure for LSI Testability" von E. B. Eichelberger - Proceedings of the Design Automation Conference No. 14, 20 - 22 Juni 1977, New Orleans, Louisiana, Seiten 462 bis 468).

Basierend auf diesen LSSD-Entwurfsregeln wird die Beobachtbarkeit und Einstellbarkeit der Gesamtheit aller Speicherelemente dadurch ermöglicht, daß die einen Bestandteil der Logik bildenden und auch zwischen den Logikstufen angeordneten Master-/Slave-Flipflops im Testbetrieb zu einer oder mehreren Schieberegisterketten zusammenschaltbar sind, über die Prüfmuster in die Tiefe der Logik hineingeschoben und Ergebnismuster herausgeschoben werden können.

Über diese Schieberegisterketten ist es auch möglich, vollständige Flipflop- oder Registerstatusinformation komplexer und hinsichtlich ihrer Packung abgegrenzter Logikgruppen, beispielsweise ein Chip oder ein Modul, hinein- und/oder herauszuschieben. Diese Schieberegisterlösung hat den Vorteil, daß nur relativ wenig Ein-/Ausgangsanschlüsse erforderlich sind und eine hochgradige Flexibilität zwischen allen Packungsstufen erreicht werden kann, wenn alle ersten Packungsstufen-Schieberegisterketten mit einer gemeinsamen zweiten Packungsstufen-Schieberegisterkette usw. verbunden wird, ohne daß dabei der logische Entwurf innerhalb des Chips beeinflußt wird.

Wegen des serialen Informationstransfers für die Durchführung von Tests durch Hineinschieben von Prüfmustern und Herausschieben von Ergebnismustern erfordert jedoch diese Schieberegisterlösung im Prüfbetrieb einen hohen Zeitaufwand, sie ist wegen ihrer Einkanaligkeit relativ störempfindlich, und sie ist auch hinsichtlich der Kosten aufwendig, da die Schieberegisterstufen aus Master-/Slave-Flipflops bestehen, von denen der Slave-Flipflop im normalen Betrieb nicht benötigt wird. Dieser letztere Nachteil hat weiter zur Folge, daß die Logikdichte auf dem Chip geringer ist als sie sein könnte, wenn nur Master-Flipflops verwendet werden könnten.

Die Erfindung hat sich somit zur Aufgabe gemacht, eine prüfbare Logikstruktur anzugeben, die auch im Prüfbetrieb äußerst schnell, zuverlässig und kostengünstig arbeiten kann und die auch zur Verbesserung der Logikdichte auf den Chips einen Beitrag liefert.

Gelöst wird diese Aufgabe der Erfindung durch die im Hauptanspruch angegebenen Merkmale. Vorteilhafte Ausgestaltungen und Weiterbildungen des Gegenstandes der Erfindung sind den Unteransprüchen zu entnehmen.

Durch die Erfindung wird somit der Vorteil erzielt, daß im Prüfbetrieb die Prüfmuster und Ergebnisdaten über den sehr schnellen Systembus von einem Wartungsprozessor oder Tester zu den zu prüfenden Logikstrukturen übertragen werden können und auch die Ergebnisdaten über dieselbe Verbindung zum Wartungsprozessor oder Tester zurückübertragen werden können.

Da es durch die Erfindung nun auch möglich ist, die Schieberegisterstufen aus Master-Flipflop-Stufen aufzubauen, die sowohl im normalen, als auch im Prüfbetrieb wichtige Funktionen übernehmen müssen, ergeben sich durch Fortfall der Slave-Flipflops Vorteile hinsichtlich der Kosten und auch hinsichtlich der Dichte der Schaltkreisstrukturen auf den Chips.

Im folgenden wird ein Ausführungsbeispiel der Erfindung anhand der Figuren erläutert. Es zeigen:

Fig. 1    das Blockschaltbild eines Digitalrechners, in dem ein Prozessor die Einrichtung zur Fehlerprüfung und -diagnose erkennen läßt,

Fign. 2    Blockschaltbilder mit einer detaillier-
und 3          teren Darstellung der Fehlerprüf-
              und Diagnoseeinrichtung,

Fig. 4    das Blockschaltbild eines bekannten Speicherelementes (Flipflops) und

Fig. 5    das Blockschaltbild eines für die Erfindung modifizierten Speicherelementes.

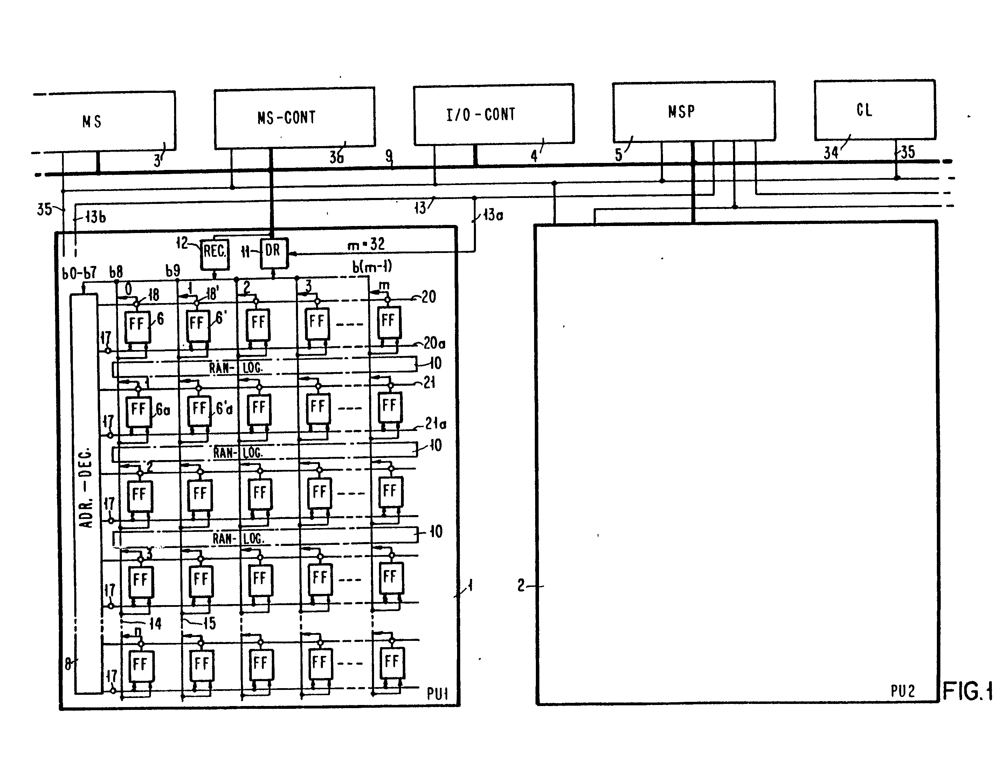

Fig. 1 zeigt das Blockschaltbild einer modular aufgebauten Datenverarbeitungsanlage, die über Einchipprozessoren oder -verarbeitungseinheiten (PU1, PU2) 1 und 2 verfügt, die über einen (standardisierten) Systembus 9 sowohl miteinander als auch mit einem Hauptspeicher (MS) 3, einer Hauptspeicher-Steuereinheit (MS-CONT) 3a, einer Ein-/Ausgabegerätesteuerung (I/O-CONT) 4 und einem Wartungs- und Bedienungsprozessor (MSP) 5 verbunden sind. Es existieren ferner eine Verbindung 13 zwischen den Prozessoren 1 und 2 einerseits und dem Wartungs- und Bedienungsprozessor 5 andererseits, über die Steuer- und Taktsignale von dem Wartungs- und Bedienungsprozessor 5 zu den Prozessoren 1 und 2 übertragen werden und eine Leitung 35, über die Taktsignale eines Taktgebers (CL) 34 zu den Systemkomponenten übertragen werden.

Die Erfindung wird nun im Zusammenhang mit dem nach den Prinzipien der Höchstintegrationstechnik aufgebauten Prozessor 1 erläutert. Der Systembus 9, der beispielsweise ein standardisierter Bus sein kann, möge im vorliegenden Ausführungsbeispiel eine Breite von 4 Bytes aufweisen. An diese Breite sind im Prozessor 1 sowohl die Sendeschaltungen (DR) 11, als auch die Empfangsschaltungen (REC) 12 angepaßt.

Die Speicherelemente 6, 6', 6a, 6'a, meistens sogenannte Polarity Hold Flipflops (FF), sind, wie Fig. 1 zeigt, zu Logik-Subnetzen (RAN-LOG) 10 zusammengeschaltet. Sie bilden die kombinatorische Logik des Prozessors. Die Struktur dieser kombinatorischen Logik ist, was ihre Zusammenschaltung betrifft, relativ ungeordnet, und sie unterscheidet sich erheblich von der "überlagerten" Struktur der m·n-Matrix, welche die Fig. 1 erkennen läßt. Diese aus Flipflops aufgebaute m·n-Speichermatrix ergibt sich aus einer weiteren übergeordneten Metallisierungsschicht, die nach Personalisierung das Verbindungsnetzwerk der genannten Flipflops untereinander und mit den Sende- und Empfangsschaltungen 11 und 12 des Systembusses 9 einerseits und einem Adressendekodierer (ADR-DEC) 8 andererseits bildet.

Wie noch zu sehen sein wird, wird diese aus den Flipflops gebildete Speichermatrix zum Zwecke des Testens der Logik-Subnetze vom übergeordneten Wartungs- und Bedienungsprozessor 5 benötigt. Zu den Flipflops ist zu bemerken, daß es sich bei diesen um ausschließlich Master-Flipflops handelt und nicht, wie das bei den meisten Testanwendungen der Fall ist, um Master-/Slave-Flipflops, wie in der Einleitung bereits erwähnt wurde.

Die Spaltenleitungen, von denen die ersten beiden, von links an gerechnet, mit 14 und 15 bezeichnet sind, sind mit den Bitleitungen 8 bis 31 des Systembusses 9 über die Sende- und Empfangsschaltungen 11 und 12 verbunden, während die Zeilenleitungen, von denen die obersten vier mit 20, 20a, 21 und 21a bezeichnet sind, zu entsprechenden Ausgängen des Adressendekoders 8 der Matrix führen. Der Adressendekoder ist mit den Bitleitungen 0 bis 7 über die genannten Sende- und Empfangsschaltungen 11 und 12 des Systembusses 9 verbunden. Die Sende- oder Empfangsrichtung des Datenverkehrs wird über eine Steuerleitung 13 gesteuert, die vom Wartungs- und Bedienungsprozessor 5 zu den jeweiligen Prozessoren 1, 2, usw. führt.

Im normalen Betrieb des Prozessors 1 spielen die gezeigten Flipflops ausschließlich ihre Rolle als Bestandteile der Logik-Subnetze bzw. auch der Verbindungen solcher Logik-Subnetze untereinander. Im Testbetrieb jedoch werden sie über den schnellen Systembus 9 des Wartungs- und Bedienungsprozessors 5 zeilenweise parallel mit dem Prüfmuster geladen, das als Stimulus auf die Logik-Subnetze geschaltet wird. Die Antwort der Logik-Subnetze auf die auf diese Weise eingegebenen Prüfdaten wird über die Sendeschaltungen 11 und den Systembus 9 zum Wartungs- und Bedienungsprozessor, der die Testanalyse durchführt, übertragen.

Für die Taktsteuerung der in Fig. 1 gezeigten Datenverarbeitungsanlage ist es im Prinzip gleichgültig, ob diese zentral oder dezentral erfolgt. Im vorliegenden Beispiel wird von einem zentralen Taktgeber (CL) 34 ausgegangen, der über eine zentrale Taktleitung 35 die einzelnen Einheiten 1, 2, 3, 3a, 4 und 5 der Datenverarbeitungsanlage steuert.

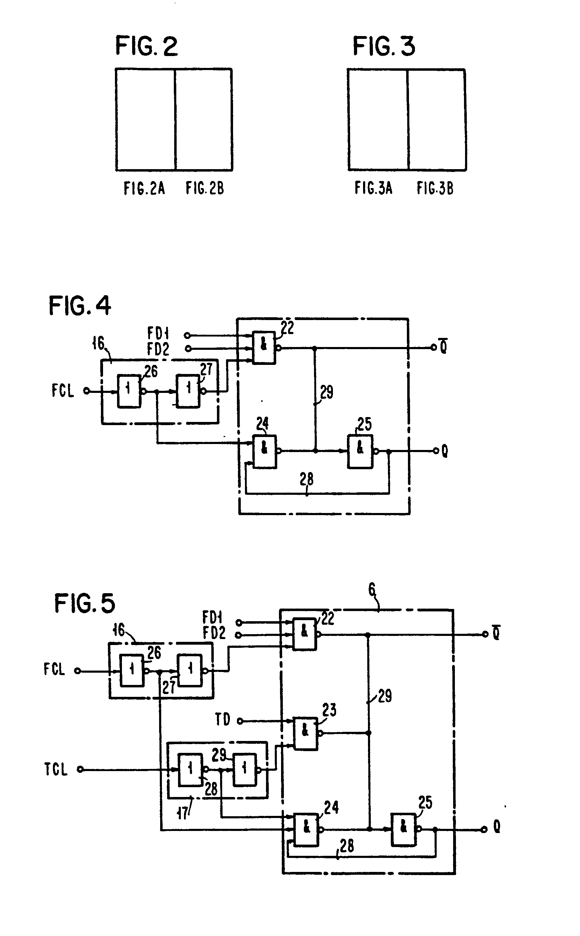

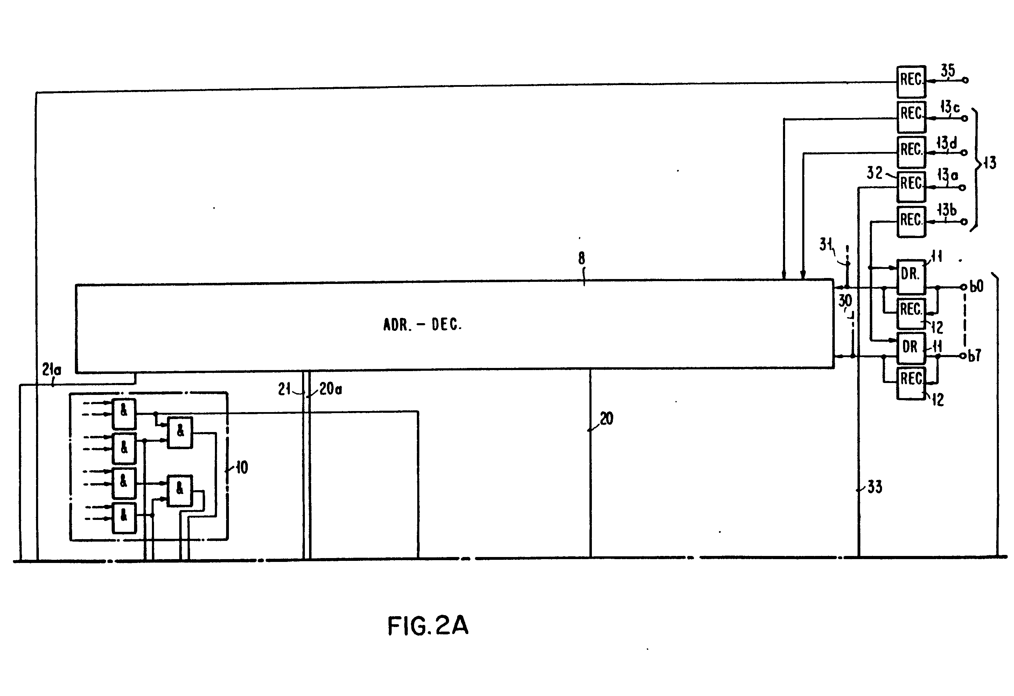

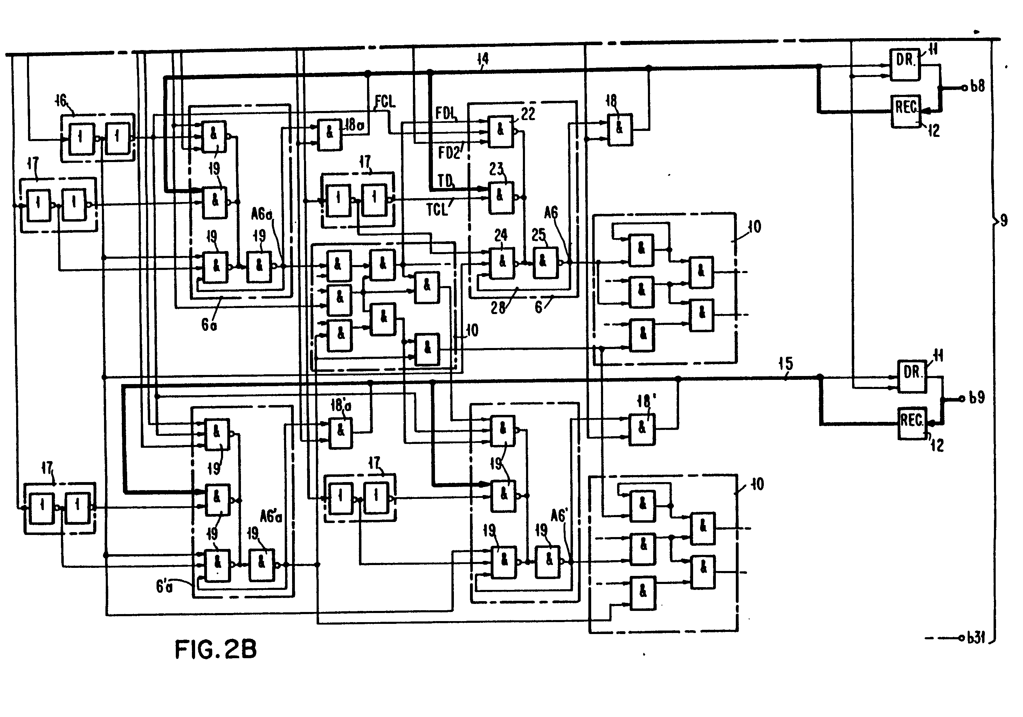

Nach dieser generellen Erläuterung wird im folgenden im Zusammenhang mit der Fig. 2 ausführlicher der Testdatentransport vom Wartungs- und Bedienungsprozessor 5 zu den Prozessoren, insbesondere zu dem Prozessor 1 beschrieben. Der Testdatentransport zu den übrigen Prozessoren 2, 3, ..., n und die Behandlung der Testdaten und Ergebnisse erfolgt im wesentlichen in der gleichen Weise, wie sie im Zusammenhang mit dem Prozessor 1 beschrieben wird.

Zum besseren Verständnis der Steuerungsvorgänge an den Flipflops, beispielsweise 6, 6', 6a und 6'a, die einmal Bestandteil der normalen Logik und ein anderes Mal Bestandteil der Testlogik sind, wobei im letzteren Falle auch noch die Übertragungsrichtung dieser Flipflops zu steuern ist, je nachdem ob sie Testdaten empfangen oder Ergebnisdaten nach einem Testschritt abgeben, dienen die Fign. 4 und 5. Wie diese Fign. 4 und 5 zeigen, handelt es sich bei den verwendeten Flipflops, die nach ihrer Funktion Zwischenspeicherelemente sind, um Flipflops des Polarity Hold Typs, von denen Fig. 4 ein solches mit zwei funktionellen Dateneingängen FD1 und FD2 und Fig. 5 ein für die Testzwecke modifiziertes Polarity Hold Flipflop zeigt, das um einen Testdateneingang TD und einen Testtakteingang TCL erweitert ist. Der normale und der erweiterte Polarity Hold Flipflop verfügen über Funktionstaktverstärker 16 zur Verteilung des Funktionstaktes FCL, der erweiterte Polarity Hold Flipflop dagegen noch über einen weiteren Taktverstärker 17 zur Verteilung des Testtaktes TCL.

Der in Fig. 4 dargestellte normale Polarity Hold Flipflop besteht aus drei NAND-Schaltungen (UND-Inverter) 22, 24 und 25, die in der gezeigten Weise miteinander verbunden sind.

Polarity Hold Flipflops speichern den an den funktionellen Dateneingängen FD1 oder FD2 während des Taktimpulses des funktionellen Taktes FCL anliegenden binären Wert für die Dauer einer Taktperiode. Dieses bedeutet, daß frühestens mit dem nächsten Taktimpuls der gespeicherte Binärwert geändert werden kann, aber nur dann, wenn sich der Binärwert am Dateneingang zu diesem Zeitpunkt geändert hat.

Der Taktimpuls wird über zwei in Serie geschaltete Inverter 26 und 27 der NAND-Schaltung 22, an der auch die binären Daten anliegen, zugeführt. Der gleiche Taktimpuls gelangt zu der NAND-Schaltung 24 etwas früher, da er nur den ersten Inverter 26 durchläuft.

Die eigentliche Speicherfunktion des Polarity Hold Flipflop, wie übrigens bei den meisten anderen Flipflop-Typen auch, ergibt sich aus der Rückkoppelverbindung 28 zwischen dem Ausgang der NAND-Schaltung 25 und einem Eingang der NAND-Schaltung 24, der nicht mit den Taktsignalen beaufschlagt wird. Die Verbindung 29 zwischen dem Ausgang der NAND-Schaltung 22 und dem Ausgang der NAND-Schaltung 24, der auch mit dem Eingang der NAND-Schaltung 25 verbunden ist, ist eine Verbindung, die eine ODER-Verknüpfung (dotted or) der Ausgangssignale der beiden NAND-Schaltungen 22 und 24 vornimmt. Diese ODER-Verbindung 29 ermöglicht auch die Erweiterung des Polarity Hold Flipflop, wie Fig. 5 zeigt, um weitere Datenleitungen und steuernde Taktleitungen anzuschließen. Der in Fig. 5 dargestellte Polarity Hold Flipflop kann daher von zwei Systemen benutzt werden, einmal nämlich vom funktionellen System mit den Dateneingängen FD1 und FD2 und dem zugehörigen funktionellen Takt FCL und zum anderen von dem Testsystem mit dem Testdateneingang TD und dem Testtakteingang TCL.

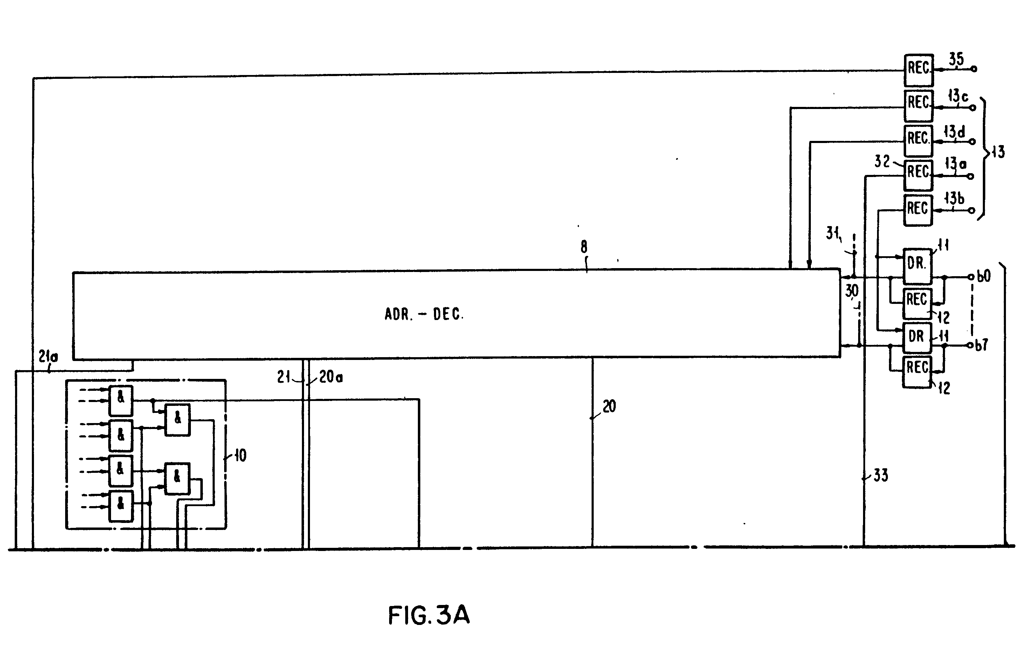

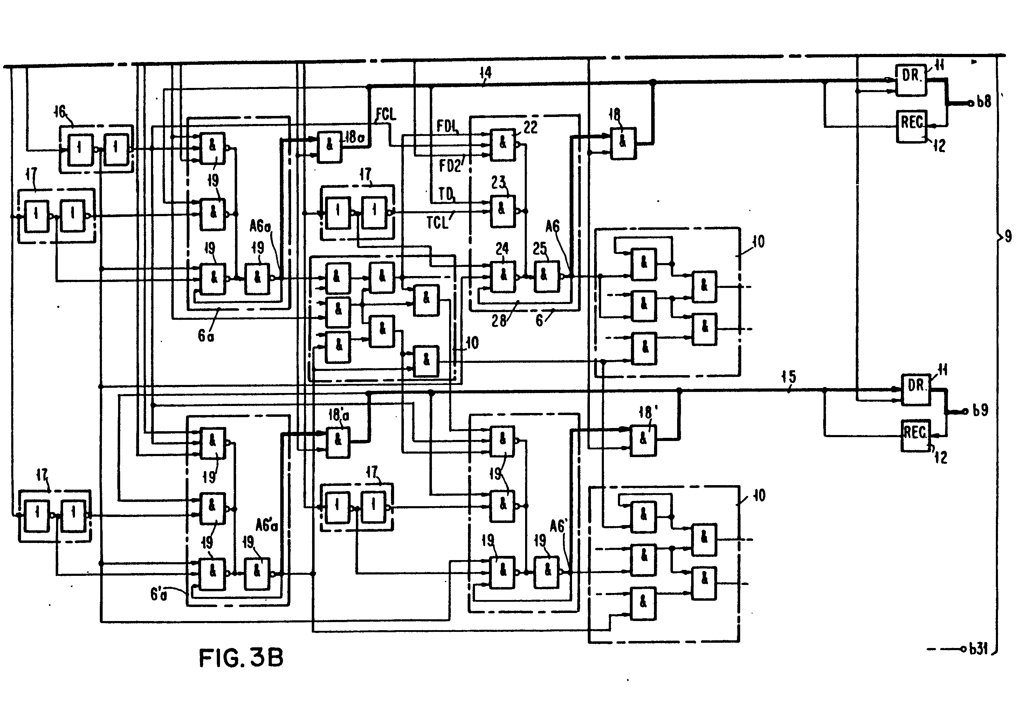

Die Fign. 2 und 3 zeigen unter anderem auch die Integration des in Fig. 5 dargestellten Polarity Hold Flipflops in die Schaltkreisstruktur des Prozessors 1 sowie auch Details dieser Integration für die Polarity Hold Flipflops 6', 6a und 6'a.

Im normalen, also im Nichttestbetrieb, erfüllen die Polarity Hold Flipflops FF in Fig. 1 über die funktionellen Dateneingänge FDi und ihre Takteingänge FCL ihre funktionale Aufgabe, im Testbetrieb verwenden sie dagegen die Testdateneingänge TD und die Testtakteingänge TCL für Testaufgaben.

Für den in Fig. 2 zugrundegelegten Betrieb, nach dem Testdaten vom Wartungs- und Bedienungsprozessor 5 über den Systembus 9 zum Prozessor 1 übertragen werden sollen (fett ausgezogene Linien), sind die Bitleitungen b0 bis b7 des Systembusses über Empfangsschaltungen 12 mit dem Matrix-Adressendekoder 8 verbunden, der über seine Matrixzeilenleitungen, von denen 20a und 21a näher dargestellt sind, die gewünschte eine Dimension der Matrix aus Polarity Hold Flipflops adressiert. Diese Adressierung in der Zeilendimension, zu der für eine vollständige Selektion eines Polarity Hold Flipflops auch noch eine ausgewählte Leitung in der Spaltendimension, die weiter unten noch erläutert wird, gehört, erfolgt dadurch, daß über die entsprechende Zeilenleitung ein Impuls des Testtaktes über einen dieser Zeilenleitung zugeordneten Testtaktverstärker 17 an den Testtakteingang TCL des auszuwählenden Polarity Hold Flipflops angelegt wird.

Die in den ausgewählten Polarity Hold Flipflop, im folgenden der Einfachheit halber nur Flipflop genannt, einzugebende Testinformation wird über die entsprechende der Bitleitungen b8 bis b31 des Systembusses 9 über jeweils diesen Leitungen zugeordnete Empfangsschaltungen 12 auf die entsprechende Spaltenleitung übertragen, von denen die Spaltenleitungen 14 und 15 ausführlicher dargestellt sind. Die Testdaten gelangen zeilenweise parallel über die Bitleitungen b8 bis b31 über jeweils diesen Leitungen zugeordnete Empfangsschaltungen 12 auf die Matrixspaltenleitungen und die mit diesen Spaltenleitungen verbundenen Testdateneingänge der Flipflops FF in die aus diesen Flipflops bestehenden Speicherelemente.

Um bei dem Beispiel des Flipflops 6 zu bleiben, können in diesen Testdaten eingespeichert werden, wenn er durch einen Impuls des Testtaktes auf der Leitung 20a über seinen Testtaktverstärker 17 in der Zeilenrichtung und über das einzuspeichernde Bit über die Bitleitung b8, die Empfangsschaltung 12, die Matrixspaltenleitung 14 und den Testdateneingang TD angesteuert wird. Auf ähnliche Weise werden auch die übrigen Flipflops der Testmatrix über die Matrixzeilenleitungen und Matrixspaltenleitungen mit Testdaten geladen.

Nach erfolgter Einspeicherung der Testdaten werden diese zu den Logik-Subnetzen 10 übertragen, um diese zu prüfen. Die Ergebnisse der Prüfung mit einem derartigen Satz von Prüfdaten werden danach in die Flipflops 6, 6', 6a, 6'a usw. der Testmatrix geladen und von dort in der Gegenrichtung über den Systembus 9 zum Wartungs- und Bedienungsprozessor 5 zwecks Testanalyse übertragen.

In Fig. 3 ist der Rückübertragungsweg der Ergebnisdaten von dem zu prüfenden Prozessor 1 auf den Systembus 9 in fett ausgezogenen Linien dargestellt. Auch in Fig. 3 sind wieder nur die Flipflops 6, 6', 6a und 6'a im Detail gezeigt. Es sei ebenfalls wieder angenommen, daß sich die im Flipflop 6 befindliche Information, ein Teil eines Testergebnisses, über den Systembus 9 zum Wartungs- und Bedienungsprozessor 5 übertragen werden soll. Zu diesem Zweck werden vom Wartungs- und Bedienungsprozessor Steuersignale über die Leitung 13 und Adressensignale über die Bitleitungen b0 bis b7 des Systembusses zum Prozessor 1 übertragen. Der Adressendekoder erzeugt im Falle der Auswahl des Flipflops 6 und der weiteren Flipflops 6' ..., die der gleichen Zeile zugeordnet sind, ein Selektionssignal auf der Matrixzeilenleitung 20, welches die zugeordneten UND-Tore 18, wie auch 18' usw. öffnet. Dadurch kann die im Flipflop 6 gespeicherte und am Ausgang des NAND-Gliedes 25 anstehende Information über das UND-Tor 18 und einen entsprechenden Teil der Matrix-Spaltenleitung 14 zur Sendeschaltung 11 übertragen werden. Ein ebenfalls vom Wartungs- und Bedienungsprozessor über die Leitung 13, eine Empfangsschaltung 32 und eine Steuerleitung 33 übertragenes Steuersignal aktiviert die Sendeschaltung 11, so daß die Information auf die Bitleitung b8 des Systembusses 9 gelangt.

Parallel zur Übertragung der Information aus dem Flipflop 6 werden auch die Inhalte der Flipflops 6' und der übrigen der gleichen Matrixzeilenleitung 20 zugeordneten Flipflops auf die entsprechenden Bitleitungen b9 bis b31 übertragen. Durch Übertragen eines Steuersignals auf der Leitung 13 sowie von Adressensignalen auf den Leitungen b0 bis b7 werden auch die übrigen Matrixzeilenleitungen 21, ... aktiviert, so daß auch die in den übrigen Flipflops gespeicherte Information, die Ergebnisdaten eines Tests, über den Systembus 9 zum Wartungs- und Bedienungsprozessor 5 zwecks Fehleranalyse übertragen wird.

In der vorstehend beschriebenen Weise können Testdaten und Ergebnisdaten des Tests über den in aller Regel sehr schnellen Systembus zwischen den interessierenden Einheiten übertragen werden.

**Patentansprüche**

1. Einrichtung zur Fehlerprüfung und -diagnose für eine elektronische Datenverarbeitungsanlage bestehend aus mindestens einem Prozessor (1; Fig. 1), einem Hauptspeicher (3) und einem Wartungs- und Bedienungsprozessor (5), die über einen schnellen Systembus (9) miteinander verbunden sind,
dadurch gekennzeichnet,
das die Logik-Subnetze (10), die ein Prozessor (1) enthält, im normalen Betrieb verbindenden Speicherelemente (Flipflops 6, 6', 6a, 6'a, ...) im Fehlerprüf- und -diagnosebetrieb zu einer adressierbaren Matrix zusammenschaltbar sind, wobei der Wartungs- und Bedienungsprozessor (5) über den Systembus (9) sowohl Adresseninformation zur Ansteuerung der einzelnen Speicherelemente der Matrix als auch Testdaten zum Einspeichern in die Speicherelemente der Matrix sowie Teststeuer-und -taktinformation (über Leitung 13) überträgt und daß ferner nach erfolgter Prüfung der Logik-Subnetze (10) deren Ergebnisdaten in die jeweils angeschlossenen Speicherelemente gelangen und diese Ergebnisdaten von dem Wartungs- und Bedienungsprozessor aus den wieder zu einer Matrix zusammengeschalteten Speicherelementen mittels über den Systembus (9) übertragener Adresseninformation und Steuerinformation (über Leitung 13) ebenfalls über den Systembus (9) übernimmt, wobei die zweiseitige Datenübertragung in der Schnittstelle zwischen den Bitleitungen (b0 bis b31) des Systembusses (9) und den internen Datenleitungen (z. B. 14, 15, 30, 31) über Paare von Sendeschaltungen / Empfangsschaltungen (11, 12) abgewickelt wird.

2. Einrichtung nach Anspruch 1, dadurch gekennzeichnet, daß in der zu prüfenden Einheit (Prozessor 1) ein Adressendekoder (8) vorgesehen ist, der an bestimmte Bitleitungen (b0 bis b7) des Systembusses (9) geführt ist und Adresseninformation vom Wartungs- und Bedienungsprozessor (5) empfängt, während die übrigen Bitleitungen (b8 bis b31) des Systembusses (9) jeweils mit den entsprechenden Spaltenleitungen (14, 15, ..., m) der im Prüf- und Diagnosebetrieb aus den den Logik-Subnetzen (10) zugeordneten Speicherelementen (6, 6', 6a, 6'a, ...) gebildeten Matrix verbunden sind.

3. Einrichtung nach Anspruch 1 oder 2, dadurch gekennzeichnet, daß die Speicherelemente (6, 6', 6a, 6'a, ...) vom Polarity Hold Typ sind, die Funktionsdateneingänge (FD1, FD2), die mit der funktionalen Logik und Testdateneingänge (TD), die mit einer entsprechenden Spaltenleitung (14, 15, ...) der Matrix verbunden sind sowie Funktionstakteingänge (FCL), die mit den Funktionstaktleitungen (35) und Testtakteingänge (TCL), die mit den jeweiligen Matrix-Zeilenleitungen (20a, 21a, ...) verbunden sind, aufweisen, über welche sie zeilenweise parallel für das Laden von Testdaten ansteuerbar sind und daß sie ferner Ausgänge (A6, A6', A6a, A6'a,...) aufweisen, die, ODER-verknüpft, zu einem nachfolgenden Logik-Subnetz (10) und zu einem UND-Tor (18, 18', 18a, 18'a) führen, dessen jeweiliger Ausgang mit einer entsprechenden Matrix-Spaltenleitung (14, 15, ...) verbunden ist, wobei die genannten UND-Tore über entsprechende Matrixzeilenleitungen (20, 21, ...) für eine zeilenweise Übertragung der Ergebnisdaten auf die Matrix-Spaltenleitungen durchgeschaltet werden.

4. Einrichtung nach einem oder mehreren der Ansprüche 1 bis 3, dadurch gekennzeichnet, daß die jeweilige Aktivierung der Sendeschaltungen und Empfangsschaltungen (11, 12) über separate Steuerleitungen (13a, 13b) vom Wartungs- und Bedienungsprozessor (5) vorgenommen wird.

5. Einrichtung nach einem oder mehreren der Ansprüche 2 bis 4,

dadurch gekennzeichnet,

daß dem Adressendekoder (8) Testtaktimpulse über separate Taktleitungen (13c, 13d) vom Wartungs- und Bedienungsprozessor (5) zugeführt werden.

6. Einrichtung nach einem oder mehreren der Ansprüche 1 bis 6,

dadurch gekennzeichnet,

daß den Speicherelementen (beispielsweise Flipflops 6, 6', 6a, 6'a) die Taktimpulse des Funktionstaktes über Funktionstaktverstärker (16) und des Testtaktes über Testtaktverstärker (17) zugeführt werden.

7. Einrichtung nach einem oder mehreren der Ansprüche 1 bis 6,

dadurch gekennzeichnet,

daß anstelle des internen Wartungs- und Bedienungsprozessors (5) für Testzwecke ein externer Tester an den Systembus (9) anschließbar ist.

## Claims

1. Error test and diagnostic device for an electronic data processing system comprising at least one processor (1; Fig. 1), one main storage (3) and one maintenance and service processor (5) interconnected by a fast system bus (9), characterized in that the storage elements (flipflops 6, 6', 6a, 6'a, ...) , which during normal operation connect the logic subsystems (10) contained in a processor (1), can be interconnected in the error test and diagnostic mode in the form of an addressable matrix, with the maintenance and service processor (5) transferring on the system bus (9) address information for controlling the individual storage elements of the matrix and test data for entry into the individual storage elements of the matrix as well as test control and clock information (on line 13), and that, furthermore, after the logic subsystems (10) have been tested, their result data is fed to the respective connected storage elements and from said storage elements, connected in matrix form, to said maintenance and service processor with the aid of address information transferred on system bus (9) and control information (on line 13) also transferred on said system bus (9), bidirectional data transfer at the interface between the bit lines (b0 to b31) of system bus (9) and the internal data lines (e.g., 14, 15, 30, 31) being handled by pairs of driver/receiver circuits (11, 12).

2. Device according to claim 1, characterized in that the unit (processor 1) to be tested comprises an address decoder (8) which is connected to particular bit lines (b0 to b7) of the system bus (9) and receives address information from the maintenance and service processor (5), while the remaining bit lines (b8 to b31) of the system bus (9) are in each case connected to the column lines (14, 15, ..., m) of the matrix formed in the test and diagnostic mode from the storage elements (6, 6', 6'a,) associated with the logic subsystems (10).

3. Device according to claim 1 or 2, characterized in that the storage elements (6, 6', 6a, 6'a, ) are of the polarity hold type and comprise functional data inputs (FD1, FD2) connected to the functional logic, and test data inputs (TD) connected to the respective column line (14, 15, ...) of the matrix, as well as functional clock inputs (FCL) connected to the functional clock lines (35), and test clock inputs (TCL) connected to the respective matrix row lines (20a, 21a, ...) , by means of which they can be controlled in parallel for loading test data, and that they also comprise outputs (A6, A6', A6a, A6'a, ...) which in an ORed form are connected to a logic subsystem (10) following them and to an AND gate (18, 18', 18a, 18'a) , the respective output of which is connected to an associated matrix column line (14, 15, ...) , said AND gates being connected through associated matrix row lines (20, 21,...) to the matrix column lines for the row-by-row transfer of the result data.

4. Device according to any one or several of the claims 1 to 3, characterized in that the driver and receiver circuits (11, 12) are activated through separate control lines (13a, 13b) from the maintenance and service processor (5).

5. Device according to any one or several of the claims 2 to 4, characterized in that the address decoder (8) receives test clock pulses from the maintenance and service processor (5) on separate clock lines (13c, 13d).

6. Device according to any one or several of the claims 1 to 6, characterized in that the storage elements (e.g., flip-flops 6, 6', 6a, 6'a) receive the clock pulses of the functional clock through functional amplifier (16) and the test clock through test clock amplifier (17).

7. Device according to any one or several of the claims 1 to 6, characterized in that in lieu of the internal maintenance and service processor (5) an external tester may be connected to the system bus (9) for test purposes.

## Revendications

1. Dispositif de test et de diagnostic des défauts pour une installation électronique de traitement de données comprenant au moins un processeur (1; figure 1), une mémoire centrale (3) et un processeur de contrôle et de commande (5), qui sont interconnectés au moyen d'un bus système rapide,

caractérisé en ce que,

les sous-réseaux logiques (10), qui sont contenus dans le processeur (1), reliant en fonctionnement normal des éléments de mémoire (bascules 6, 6', 6a, 6'a...) , sont interconnectables, pendant une opération de test et de diagnostic, à une matrice adressable, d'où il résulte que le processeur de contrôle et de commande (5) transmet, au moyen du bus système (9), aussi bien des informations d'adresse pour l'excitation de chacun des éléments de mémoire de la matrice que des données de test pour une mémorisation dans les éléments de mémoire de la matrice, ainsi que des informations de commande de test et des informations d'horloge (au moyen du conducteur 13), et en ce que en outre le processeur (1), après une réalisation de test des sous-réseaux logiques (10) dont les données de résultat parviennent aux éléments de mémoire actuellement connectés et après une transmission d'informations d'adresse et de commande (au moyen du conducteur 13), assure, au moyen du bus système (9), la sortie vers, et à nouveau l'introduction dans, des éléments d'une mémoire interconnectés au moyen du bus système (9) de ces données de résultats issues du processeur de contrôle et de commande (5), d'où il résulte que la transmission de données dans les deux sens se produit dans l'interface entre les conducteurs binaires (b0 à b31) du bus système (9) et les conducteurs internes de données (par exemple, 14, 15, 30, 31) au moyen d'un couple circuit émetteur/circuit récepteur (11, 12).

2. Dispositif selon la revendication 1, caractérisé en ce que, dans l'unité de test (le processeur 1), il est prévu un décodeur d'adresses (8) qui est relié à certains conducteurs binaires (b0 à b7) du bus système (9) et qui reçoit des informations d'adresses issues du processeur de contrôle et de commande (5), tandis que les autres conducteurs binaires (b8 à b31) du bus système (9) sont reliés s'il y a lieu aux conducteurs de colonne correspondants (14, 15...m) de la matrice construite, en fonctionnement de test et de diagnostic, à partir des éléments de mémoire (6, 6', 6a, 6'a...) coordonnés aux sous-réseaux logiques (10).

3. Dispositif selon la revendication 1 ou 2, caractérisé en ce que les éléments de mémoire (6, 6', 6a, 6'a...) sont du type à maintien de polarité, lesquels présentent des entrées de données de fonction (FD1, FD2), connectées à une logique de fonction et des entrées de données de test (TD), connectées à un conducteur de colonne correspondant (14, 15....) de la matrice, ainsi que des entrées (l'horloge de fonction (FCL) , connectées à des conducteurs d'horloge de fonction (35) et des entrées d'horloge de test (TCL), connectées à chaque conducteur de ligne (20a, 21a. ..) de la matrice, au moyen desquels ils peuvent être commandés ligne par ligne pour le chargement des données de test, et en ce que ces éléments présentent en outre des sorties (A6, A6', A6'a...) qui, par une liaison OU, conduisent à un sous-réseau logique (10) suivant et à une porte ET (18, 18', 18a, 18'a) dont chaque sortie est connectée à un conducteur de colonne correspondant (14, 15, ...) de la matrice, d'où il résulte que lesdites portes ET, sont reliées aux conducteurs de ligne correspondants (20, 21,...) de la matrice pour transmettre ligne par ligne les données de résultat aux conducteurs de colonne de la matrice.

4. Dispositif selon l'une quelconque des revendications 1 à 3, caractérisé en ce que chaque excitation du circuit émetteur et du circuit récepteur (11, 12) est prise en charge par des conducteurs de commande distincts (13a, 13b) à partir du processeur de contrôle et de commande (5).

5. Dispositif selon l'une quelconque des revendications 2 à 4, caractérisé en ce que les impulsions de test d'horloge sont transmises au décodeur d'adresses (8) au moyen de conducteurs d'horloge distincts (13c, 13d) à partir du processeur de contrôle et de commande (5).

6. Dispositif selon l'une quelconque des revendications 1 à 6, caractérisé en ce que les impulsions d'horloge de l'horloge de fonction sont transmises aux éléments de mémoire (par exemple des bascules 6, 6', 6a, 6'a) au moyen d'un amplificateur d'horloge de fonction (16), et celles de l'horloge de test au moyen d'un amplificateur d'horloge de test (17).

7. Dispositif selon l'une quelconque des revendications 1 à 6, caractérisé en ce que un testeur externe peut être raccordé au bus système (9) à la place du processeur interne de contrôle et de commande (5) pour réaliser des tests.

FIG.1

EP 0 126 785 B1

EP 0 126 785 B1

FIG. 2

FIG.2A   FIG.2B

FIG. 3

FIG.3A   FIG.3B

FIG. 4

FIG. 5

3

EP 0 126 785 B1

FIG.2A

FIG.2B

EP 0 126 785 B1

FIG.3A

FIG. 3B